# DEMANDE DE BREVET EUROPEEN

(11) **EP 3 549 761 A1**
(43) Date de publication de la demande: **09.10.2019**
(21) Numéro de dépôt: 19166820.1
(22) Date de dépôt: 02.04.2019
(51) Int. Cl.: B32B 17/10, C03C 27/12, E06B 3/54

(54) **VITRAGE FEUILLETE FONCTIONNEL EXTERIEUR ATTACHE**

(30) Priorité: 05.04.2018 FR 1870399
(71) Demandeur: Noemille Participations, 74460 Marnaz (FR)
(72) Inventeur: SOULIE, Pascal, 74150 BLOYE (FR)
(74) Mandataire: Gasquet, Denis

(57) **Abrégé**

Vitrage feuilleté fonctionnel (1) destiné à recevoir au moins un dispositif de fixation (11), comprenant un premier panneau de verre (2) assemblé à un second panneau de verre (3), lesdits panneaux de verre (2, 3) comprenant chacun au moins un orifice (4a, 4b) traversant, formant une paire d'orifices coaxiaux, les panneaux de verre (2, 3) délimitant un espace intercalaire (15) dans lequel sont présent un joint d'étanchéité périphérique et un film fonctionnel (6) présentant au moins une découpe (16) délimitant un espace intérieur, caractérisé en ce qu'en périphérie de chacune des paires d'orifices est agencé un joint d'étanchéité annulaire (7) dans l'espace intérieur de la découpe (16) du film fonctionnel (6).

## Description

La présente invention concerne le domaine des vitrages feuilletés fonctionnels extérieurs attachés.

La présente invention concerne autant les vitrages feuilletés dits simples, que des vitrages feuilletés intégrés dans des vitrages multiples dits doubles ou triples vitrages, comprenant des dispositifs de fixation traversants.

Une façade d'un bâtiment intégralement ou partiellement vitré, dans laquelle des panneaux de verre sont adjacents, sont en général attachés soit à une structure dédiée soit les uns aux autres par des dispositifs de fixation mécanique, localisés usuellement à chacun des coins du vitrage. Ces vitrages sont nommés vitrages extérieurs attachés, sous l'acronyme VEA.

Les panneaux de verre ne participent pas à la stabilité du bâtiment, mais sont grandement sollicités par les contraintes climatiques et/ou sismiques, et doivent pouvoir se déformer librement. L'effet des charges climatiques, engendrant des contraintes de flexion, de dilatation thermique, voire dans le cas de vitrages multiples, de force de cisaillement excessive, amène des modifications de la géométrie des vitrages.

Ces dispositifs de fixation traversent usuellement de part en part les panneaux de verre et sont liés les uns aux autres de manière articulée entre eux. Ces dispositifs de fixation peuvent être également liés entre eux par des pattes d'attache connectées à la structure du bâtiment.

Ces pattes d'attache sont assemblées par une ossature secondaire intérieure ou extérieure généralement métallique pour la réalisation de pans de verre verticaux ou inclinés.

Le rôle de ces fixations est de transmettre à l'ossature secondaire, ainsi qu'à la structure du bâtiment, tout ou partie des charges climatiques, éventuellement les sollicitations dynamiques, telles qu'un choc ou encore les effets sismiques, et les contraintes propres dues au poids des panneaux de verre.

De manière commune, un dispositif de fixation mécanique est usuellement une fixation ponctuelle cylindro-conique, traversant le verre et serrée par un écrou usiné, assemblée par un scellement silicone au vitrage.

Ainsi, un vitrage feuilleté constitué de deux panneaux de verre, présente un orifice fraisé sur l'un des panneaux de verre destiné à recevoir la tête conique du dispositif, et un orifice cylindrique sur l'autre panneau destiné au passage du corps cylindrique du dispositif. Le perçage du verre peut être également totalement cylindrique, auquel cas la fixation ponctuelle présente une face épaulée en lieu et place de la partie cylindro-conique de la tête du dispositif de fixation.

Les parties en acier inoxydable d'un dispositif de fixation, sont enchâssées dans une pièce intercalaire en aluminium anodisé ou en matériau thermoplastique, afin d'éviter un contact direct entre l'acier et les panneaux de verre, susceptible d'engendrer des contraintes mécaniques indésirables.

Les contraintes mécaniques du second panneau de verre au contact du dispositif de fixation sont relativement peu importantes pour un vitrage feuilleté de sécurité conventionnel, mais ce qui n'est pas le cas pour un vitrage feuilleté fonctionnel susceptible de monter de manière excessive en température.

Lors d'un montage d'un vitrage feuilleté non fonctionnel, tel que de sécurité, le film synthétique intercalaire est simplement entaillé et ébavuré au niveau des orifices des panneaux de verre, pour la mise en place du dispositif de fixation.

Un vitrage feuilleté est un assemblage de deux ou plusieurs feuilles de verre minéral ou organique assemblées entre elles par un ou plusieurs films intercalaires en plastique, préférentiellement en thermoplastique, tandis qu'un double ou triple vitrage est un assemblage de deux ou trois feuilles de verre ou vitrages feuilletés assemblés entre eux, unis sur leur pourtour par un ou des intercalaire(s) métallique(s) ou un ou des intercalaire(s) thermoplastique(s) communément appelé(s) « vitrage à intercalaires chauds » et séparés par un espace d'air ou de gaz.

L'isolation périphérique de l'espace intercalaire entre deux panneaux de verre d'un vitrage feuilleté fonctionnel ou non, dans lequel est localisé le film intercalaire, est communément assurée par un cordon d'étanchéité, par exemple en polymère butyle.

Les vitrages d'un pan, sont liés entre eux, à leur périphérie respective, par un cordon en élastomère, assurant une barrière d'étanchéité. Toutefois, cette étanchéité est toute relative. Cette étanchéité est suffisante pour la périphérie des vitrages, sachant qu'un risque d'infiltration d'eau ou d'air ou simplement un phénomène de condensation ou de diffusion d'air, peut être considéré comme peu dommageable au regard de la destination des locaux.

Dans le cadre de vitrages feuilletés de sécurité extérieurs attachés, dans lesquels est utilisé un film intercalaire traditionnel, tel qu'en poly(butyral de vinyle), non sensible à l'oxydation, l'étanchéité entre un dispositif de fixation et le vitrage est simplement assuré par l'insertion de mastic en silicone, ce qui est suffisant pour assurer une bonne étanchéité pour cette application.

Cependant, les phénomènes de condensation et de diffusion d'air, en direction d'un film fonctionnel localisé entre deux panneaux de verre, dans un vitrage feuilleté, sont très dommageables, étant donné que les films fonctionnels sont en général sensibles à l'oxydation, altérant leurs performances et leur transparence, de manière irréversible.

Un dispositif de fixation VEA traversant de part en part un vitrage feuilleté, traverse donc également le film intercalaire fonctionnel, la présence de mastic, par exemple en silicone, en tant que barrière d'étanchéité n'est pas suffisante pour éviter la diffusion d'eau et d'air en direction du film.

Afin d'améliorer les performances des vitrages, le film intercalaire d'un verre feuilleté peut présenter des propriétés thermochromiques, électro-chromiques ou photovoltaïques. Ces vitrages sont communément appelés des vitrages fonctionnels ou dynamiques.

La sollicitation thermique des vitrages est majoritairement due au rayonnement solaire, qui est d'autant plus augmentée, de par la présence d'un film fonctionnel thermiquement absorbant.

Ces films intercalaires fonctionnels ont tendance à augmenter de manière plus importante en température qu'un film intercalaire de sécurité, ce qui est d'autant plus vrai pour un film ayant des propriétés thermochromiques.

Un film intercalaire thermochrome est composé de matériaux dont les propriétés optiques changent en fonction de la température, de manière réversible, par exemple un film polymère dopé avec des complexes de métaux de transition tel que l'oxyde de vanadium. Les métaux de ces complexes changent de coordination, modifiant la transmission et la couleur du film polymère sous l'effet de la température.

Un film intercalaire électrochrome a la particularité de changer de propriétés optiques sous l'effet de l'application d'un champ électrique. Ces changements de propriétés optiques peuvent être rémanents mais réversibles ou non rémanents, correspondent à des vitraux appelés « assombrissants » et « obturateurs » respectivement, tel qu'indiqué dans le document « les verres à couches, Serge Etienne, Laboratoire de Physique des matériaux, UMR CNRS 7756, Nancy Pôle Verrier/Cerfav, février 09 ».

En effet, sous la sollicitation des infra-rouges pour un vitrage thermochrome, ou sous la sollicitation d'un courant électrique pour un vitrage éléctrochrome, les films intercalaires fonctionnels ont la particularité de changer de propriétés optiques et lorsque ceux-ci sont à l'état coloré, ils sont fortement absorbants sur le plan énergétique. Lorsque ces vitrages sont soumis à un fort ensoleillement, ils s'échauffent et peuvent atteindre des températures élevées atteignant 80°C.

La sollicitation thermique d'un vitrage feuilleté fonctionnel est donc plus importante, et engendre des contraintes mécaniques notamment dues à la dilatation thermique des panneaux de verre. Ces dilatations thermiques sont plus importantes au niveau du second panneau de verre en regard de la partie cylindrique du dispositif de fixation mécanique, pouvant engendrer des risques de dégradation dus à une pression excessive sur les parois du dispositif de fixation. Ces risques de dégradation peuvent être engendrés par un phénomène de descente du second panneau de verre.

En effet, le second panneau de verre est simplement retenu par adhérence au film intercalaire, la montée en température du vitrage, et donc de l'intercalaire amène ce dernier à beaucoup plus de souplesse et donc d'engendrer un risque de décohésion de l'assemblage feuilleté sous l'effet d'un mouvement de cisaillement des panneaux de verre.

Ces sollicitations thermiques engendrant des contraintes mécaniques sont d'autant plus importantes sur les vitrages multiples que sur les vitrages dits simples, dues majoritairement aux poids plus importants des vitrages multiples engendrant des forces de cisaillement qui peuvent devenir importantes et dont les conséquences peuvent être dramatiques.

La présente invention propose un vitrage feuilleté fonctionnel extérieur attaché, permettant de pallier les inconvénients précités.

Ainsi, un vitrage feuilleté fonctionnel selon l'invention, est destiné à recevoir au moins un dispositif de fixation, et comprend un premier panneau de verre assemblé à un second panneau de verre, les panneaux de verre comprenant chacun au moins un orifice traversant, formant une paire d'orifices coaxiaux, les panneaux de verre délimitant un espace intercalaire dans lequel sont présent un joint d'étanchéité périphérique et un film fonctionnel présentant au moins une découpe délimitant un espace intérieur, tandis qu'en périphérie de chacune des paires d'orifices est agencé un joint d'étanchéité annulaire dans l'espace intérieur de la découpe du film fonctionnel.

Selon des modes de réalisation, le film fonctionnel est un film thermochrome, éléctrochrome, ou photovoltaïque de préférence thermochrome.

Selon une caractéristique, le joint d'étanchéité annulaire est un polymère thermoplastique imperméable aux gaz.

Selon la caractéristique précédente, le joint d'étanchéité annulaire est un caoutchouc butyle.

Selon un mode de réalisation, le dimensionnement de la découpe est supérieur au diamètre du joint d'étanchéité annulaire.

L'invention concerne également un vitrage feuilleté fonctionnel extérieur attaché, dans lequel le vitrage feuilleté fonctionnel est tel que présenté précédemment, vitrage feuilleté fonctionnel extérieur attaché comprenant un dispositif de fixation cylindro-conique ou cylindrique comprenant une pièce conique ou cylindrique, prolongée par pièce cylindrique intérieure, le dispositif de fixation étant localisé dans la paire d'orifices coaxiaux, tandis que le dispositif de fixation comprend un moyen de calage en périphérie de la pièce cylindrique intérieure.

Selon une caractéristique, le dispositif de fixation comprend une pièce cylindrique extérieure emmanchée autour de la pièce cylindrique intérieure.

Selon la caractéristique précédente, le moyen de calage est un joint torique, tandis que la pièce cylindrique extérieure comprend avantageusement une rainure périphérique annulaire, dans laquelle est localisée le joint torique destiné à venir au contact de la paroi de l'orifice du second panneau de verre.

Selon un autre mode de réalisation, le moyen de calage est un couple de bagues excentrées.

Selon le mode de réalisation précédent, la pièce cylindrique extérieure comprend un dégagement périphérique annulaire débouchant vers l'une de ses extrémités latérales destinée à être disposée en opposition de la pièce conique ou cylindrique.

L'invention concerne également un dispositif de fixation cylindro-conique ou cylindrique d'un vitrage extérieur attaché comprenant un assemblage de pièces de révolution, l'assemblage comprenant une pièce conique ou cylindrique, prolongée par pièce cylindrique intérieure enchâssée dans une pièce cylindrique extérieure qui comprend soit une rainure périphérique annulaire dans laquelle est localisé un joint torique soit un dégagement périphérique supérieure débouchant vers son extrémité latérale destinée à être disposée en opposition de la pièce conique ou cylindrique, le dit dégagement étant destiné à être enchâssé par un couple de bagues excentrées.

L'invention concerne également un procédé d'assemblage d'un vitrage feuilleté fonctionnel selon l'invention, qui comprend les étapes de prise d'un premier panneau de verre dans lequel sont préalablement fraisé ou percé au moins un orifice, de pose d'un joint d'étanchéité périphérique à la périphérie d'une des faces du premier panneau de verre, délimitant un espace intérieur destiné à la pose du film fonctionnel, de pose d'un joint d'étanchéité annulaire en périphérie dudit au moins un orifice, de positionnement du film fonctionnel, dans lequel est préalablement réalisé au moins une découpe, de sorte à ce qu'il soit placé dans l'espace intérieur du joint d'étanchéité périphérique et de sorte à ce qu'au moins une découpe soit positionnée en périphérie d'un joint d'étanchéité annulaire, de pose du second panneau de verre en regard de l'assemblage du joint d'étanchéité périphérique, du film fonctionnel et d'au moins un joint annulaire, postérieurement à la réalisation d'un orifice en correspondance de celui réalisé sur le premier panneau de verre, de laminage à chaud de l'ensemble assemblé précédemment.

D'autres caractéristiques et avantages de l'invention se dégageront de la description qui va suivre en regard des dessins annexés qui ne sont donnés qu'à titre d'exemples non limitatifs.
La figure 1 est une vue en coupe d'un simple vitrage feuilleté fonctionnel extérieur attaché.
La figure 2 est une vue en coupe d'un simple vitrage feuilleté fonctionnel extérieur attaché dans lequel le dispositif de fixation comprend un joint torique disposé au contact du second panneau de verre.
La figure 3 est une vue en coupe d'un simple vitrage feuilleté fonctionnel extérieur attaché dans lequel le dispositif de fixation comprend un couple de bague excentré disposé au contact du second panneau de verre.
La figure 4 est une vue en coupe d'un double vitrage feuilleté fonctionnel extérieur attaché.
La figure 5 est une vue en coupe d'un double vitrage feuilleté fonctionnel extérieur attaché dans lequel le dispositif de fixation comprend un joint torique disposé au contact du second panneau de verre.
La figure 6 est une vue en coupe d'un double vitrage feuilleté fonctionnel extérieur attaché dans lequel le dispositif de fixation comprend un couple de bague excentré disposé au contact du second panneau de verre.

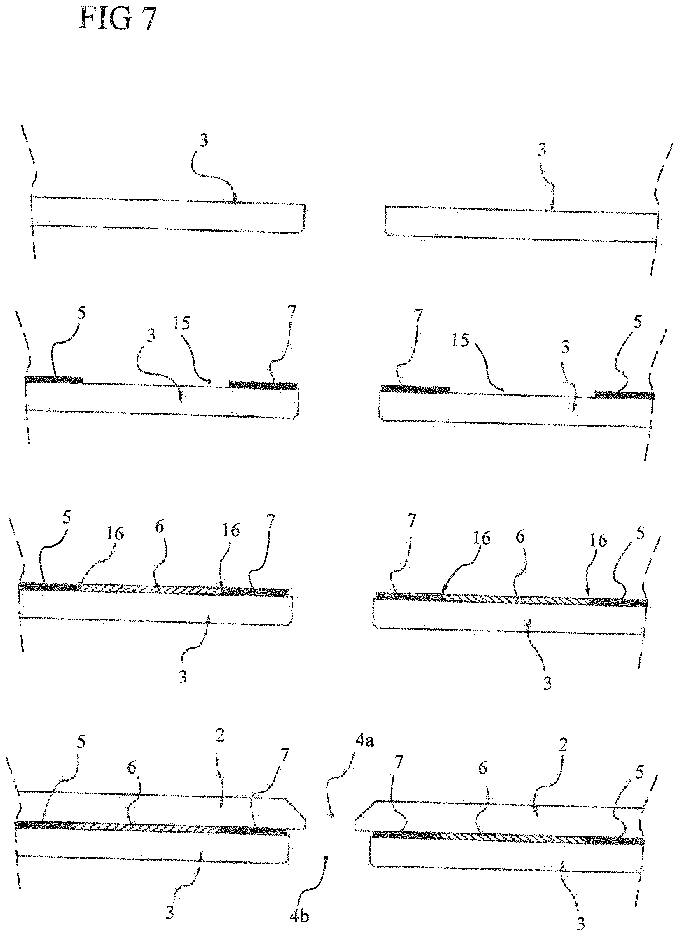

La figure 7 est une vue représentant les étapes d'assemblage d'un simple vitrage feuilleté.
La figure 8 est une vue en coupe d'un dispositif de fixation selon un mode de réalisation de l'invention.
La figure 9 est une vue de face d'un assemblage de vitrages extérieurs attachés.

Ainsi, un vitrage feuilleté fonctionnel (1) selon l'invention, comprend deux panneaux de verre (2, 3), à savoir un premier panneau de verre (2) et un second panneau de verre (3), un film fonctionnel (6), un joint d'étanchéité périphérique (5), au moins une paire d'orifices (4a, 4b) traversants coaxiaux, à savoir un premier orifice (4a) et un second orifice (4b), localisés respectivement sur le premier panneau de verre (2) et le second panneau de verre (3) et au moins un joint d'étanchéité annulaire (7) en périphérie des orifices (4a, 4b).

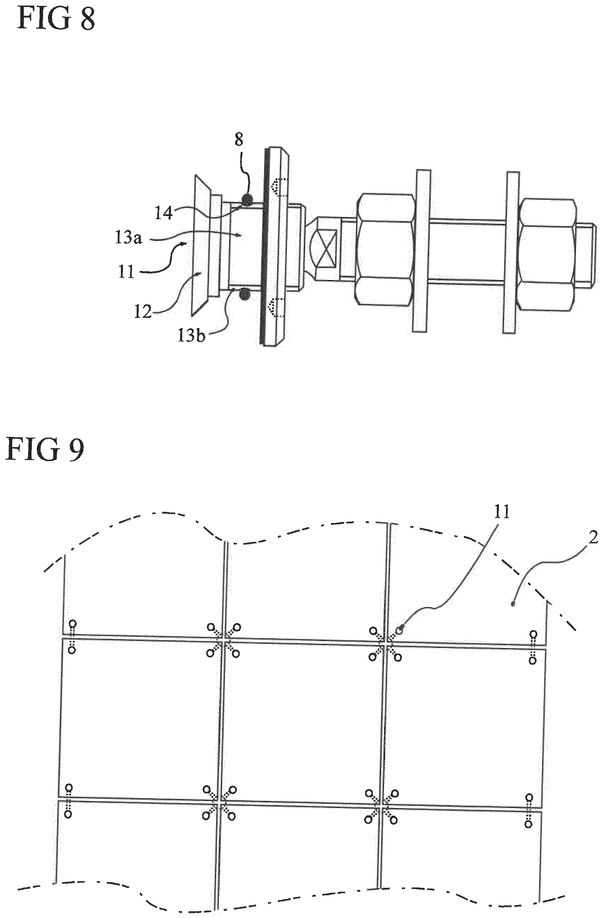

Des vitrages feuilletés fonctionnels (1) selon l'invention sont destinés à l'assemblage d'une paroi vitrée, telle qu'illustrée à la figure 9, connectés les uns aux autres par des dispositifs de fixation (11), avantageusement connectés par une ossature secondaire, non représentée.

Il est entendu qu'étant donné les tolérances de perçage et d'assemblage des panneaux de verre en vitrage feuilleté, les paires d'orifices sont considérés comme coaxiaux tout en ayant une certaine tolérance, en général de plus ou moins un millimètre.

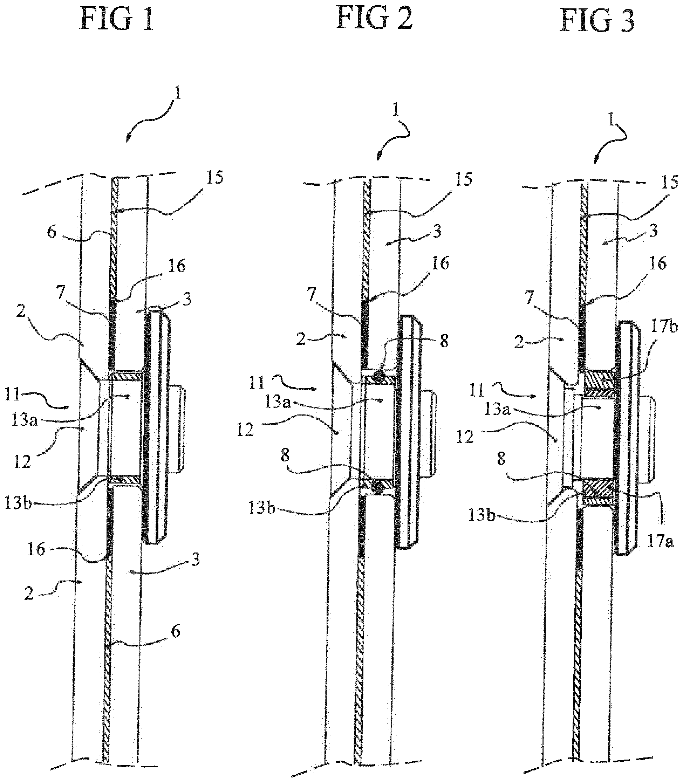

Ajoutons que les panneaux de verres (2, 3) sont agencés l'un en regard de l'autre, délimitant un espace intercalaire (15) dans lequel sont localisés le film fonctionnel (6), le joint d'étanchéité périphérique (5), ainsi qu'au moins un joint d'étanchéité annulaire (7), de préférence quatre joints d'étanchéité annulaires (7) localisés dans chacun des coins du vitrage feuilleté fonctionnel (1) en périphérie des paires d'orifice (4a, 4b) correspondants, tels qu'illustrés à la figure 1.

Notons que le film fonctionnel (6) comprend au moins une découpe (16) avantageusement circulaire, dont le diamètre est supérieur à celui d'un joint d'étanchéité annulaire (7), qui est enchâssé dans la découpe (16).

Le joint d'étanchéité périphérique (5) délimite la périphérie extérieure de l'espace intercalaire (15).

Le joint d'étanchéité périphérique (5) se présente avantageusement par un cordon thermoplastique disposé à la périphérie du film fonctionnel (6), constitué avantageusement de caoutchouc butyle également appelé polyisobutylène, plus précisément un copolymère d'isobutylène-isoprène.

Un joint d'étanchéité annulaire (7) se présente préférentiellement par une rondelle constituée d'un polymère thermoplastique, tel que du caoutchouc butyle.

Précisons qu'un caoutchouc butyle est un copolymère qui a une bonne imperméabilité au gaz et à l'eau.

Selon une caractéristique, le joint d'étanchéité périphérique (5) et les joints d'étanchéité annulaires (7) ont une bonne imperméabilité au gaz.

Précisons également que le film fonctionnel (6), au moins un joint d'étanchéité annulaire (7) et le joint d'étanchéité périphérique (5) sont laminés à chaud dans l'espace intercalaire (15) agencé entre les deux panneaux de verre (2, 3) du vitrage feuilleté fonctionnel (1).

Le joint d'étanchéité périphérique (5), ainsi qu'au moins un joint d'étanchéité annulaire (7), vont fluer lors de l'assemblage à chaud du vitrage feuilleté, et contribuer à garantir l'étanchéité de l'espace intercalaire (15).

Il est entendu que les orifices (4a, 4b) respectifs des panneaux de verre (2, 3) sont agencés deux à deux de manière coaxiale.

Ajoutons qu'en regard de chacune des paires d'orifices (4a, 4b), est positionné un joint d'étanchéité annulaire (7), le film fonctionnel (6) présentant autant de découpes (16) que de paires d'orifice (4a, 4b) et donc de joints d'étanchéité annulaires (7).

Rappelons que chacune des paires d'orifice (4a, 4b) est destinée à être enchâssée par un dispositif de fixation (11).

De manière commune à un vitrage extérieur attaché non fonctionnel, le second orifice (4b) du second panneau de verre (3) a un diamètre supérieur à celui du premier orifice (4a) du premier panneau de verre (2), de telle manière à ce que le dispositif de fixation (11) vienne fixer le premier orifice (4a) du premier panneau de verre (2), de par la partie conique (12) enchâssée dans le premier orifice (4a) du premier panneau de verre (2) et la succession de parties cylindriques (13a, 13b) venant en butée contre la paroi intérieure du premier panneau de verre (2), jouant le rôle d'écrou de serrage du premier panneau de verre (2).

A cet effet, un dispositif de fixation (11) selon les modes de réalisation illustrés, étant de forme cylindro-conique, les orifices (4a, 4b) présentent un façonnage particulier, à savoir le premier orifice (4a) est fraisé, tandis que le second orifice (4b) présente à sa périphérie de préférence un joint plat industriel (J.P.I.).

Le façonnage d'un joint plat industriel (J.P.I) consiste en la rectification et le polissage de la tranche de l'orifice et l'élimination et le polissage des bords, formant un orifice cylindrique.

Selon d'autres modes de réalisation, non représentés, le premier orifice (4a) est également cylindrique, à savoir présentant un joint plat industriel, tandis que le dispositif de fixation (11) correspondant à un profil cylindrique.

Selon les modes de réalisation précédents, la tête du dispositif de fixation (11) cylindrique présente un épaulement en lieu et place de la partie conique (12) du dispositif de fixation (11) cylindro-conique illustré.

Notons que les enseignements des modes de réalisation dans lesquels le premier orifice (4a) est fraisé, sont également applicable aux modes de réalisation dans lesquels le premier orifice (4a) est cylindrique.

Un dispositif de fixation (11) est un insert comprenant une série de pièces de révolution enchâssées les unes dans les autres.

Afin de généraliser les différents dispositifs de fixation (11) disponibles sur le marché, il sera considéré une première partie destinée à venir être enchâssée dans le premier orifice (4a) du premier panneau de verre (2), et une seconde partie destinée à venir être enchâssée dans le second orifice (4b) du second panneau de verre (3).

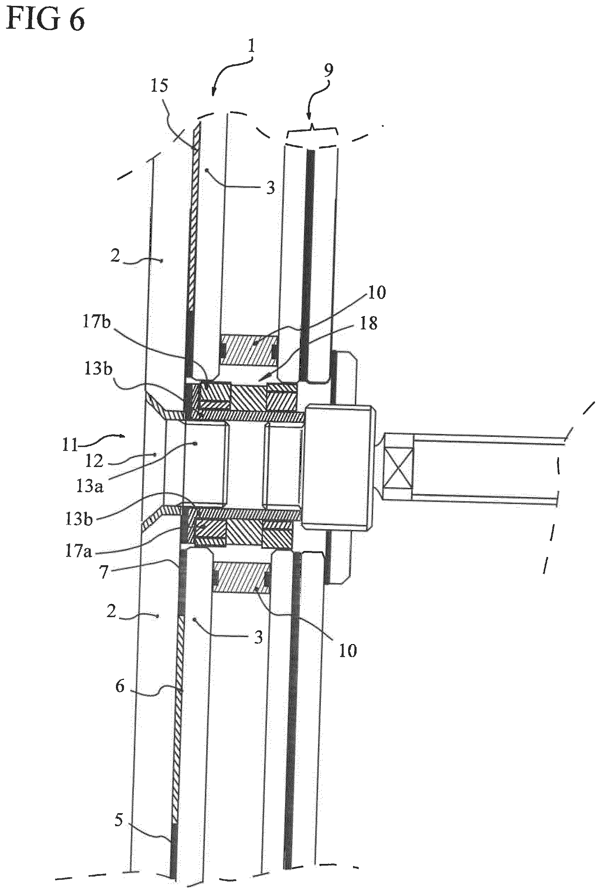

Selon les modes de réalisation illustré, la première partie comprend une pièce conique (12) en acier inoxydable avantageusement enchâssée dans une pièce en aluminium anodisé ou en thermoplastique, telle qu'illustrée à la figure 6, tandis que la seconde partie comprend une pièce cylindrique intérieure (13a) enchâssée dans une pièce cylindrique extérieure (13b), mais il pourrait en être autrement, tel qu'introduit précédemment, la première partie comprend une tête cylindrique.

Notons que la pièce cylindrique intérieure (13a) comprend avantageusement un filetage sur sa surface extérieure, tandis que la pièce cylindrique extérieure (13b) comprend un taraudage correspondant.

La pièce conique (12) étant destinée à venir épouser les parois intérieures du premier orifice (4a) fraisé, tandis que la pièce cylindrique extérieure (13b) étant destinée à venir s'enchâsser dans le second orifice (4b), telles qu'illustrées notamment aux figures 1 et 3.

Notons que la pièce cylindrique extérieure (13b) au contact du second panneau de verre (3) est avantageusement un écrou de serrage du premier panneau de verre (2).

Selon une caractéristique supplémentaire, un dispositif de fixation comprend un moyen de calage en périphérie de la pièce cylindrique extérieure (13b), destiné à limiter, voire à supprimer les sollicitations mécaniques du second panneau de verre (3) contre la pièce cylindrique extérieure (13b), lors notamment de phénomènes de dilation thermique d'un vitrage feuilleté fonctionnel (1).

Selon un mode de réalisation, le moyen de calage est un joint torique (8).

Selon le mode de réalisation précédent, le joint torique (8) étant destiné à venir au contact de la tranche du second orifice (4b).

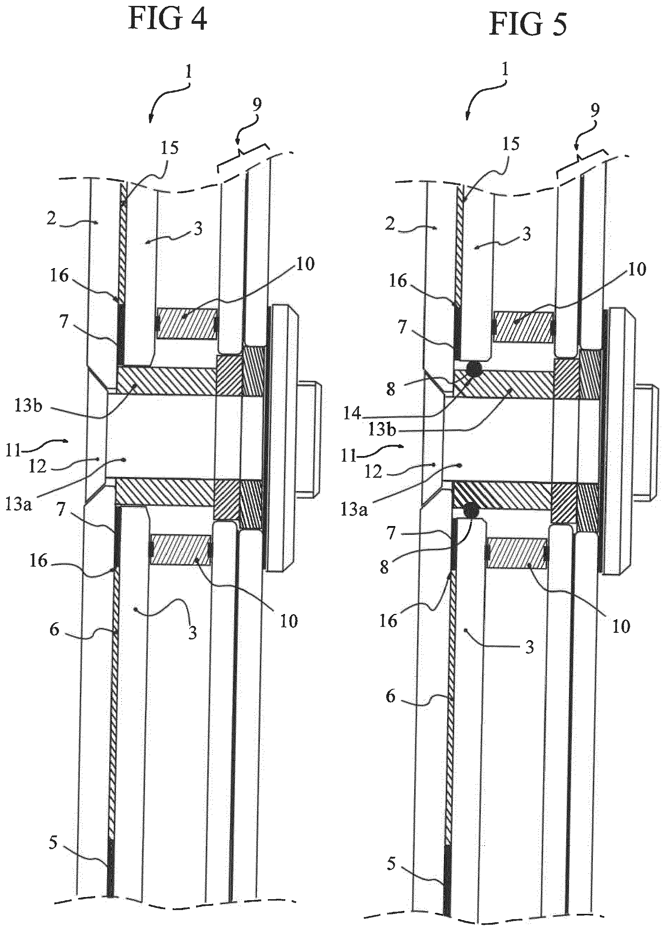

Selon un mode d'exécution, la pièce cylindrique extérieure (13b) comprend une rainure périphérique annulaire (14) destinée au placement du joint torique (8), telle qu'illustrée notamment à la figure 8, ainsi qu'en position d'utilisation aux figures 2 et 5.

Tel qu'introduit précédemment, la présence du joint torique (8) a pour effet d'absorber les contraintes mécaniques du second panneau de verre (3) exercées sur la pièce cylindrique extérieure (13b) du dispositif de fixation (11), lors de sollicitations thermiques excessives, dues notamment aux phénomènes de dilatation du second panneau de verre (3), limitant voir supprimant les risques de cisaillement entre les deux panneaux de verre (2, 3).

Selon une caractéristique, le joint torique (8) a avantageusement une dureté Shore comprise entre 50 et 90 Shore A, de préférence 60 Shore A.

Selon une caractéristique complémentaire, la largeur du joint torique (8) est comprise entre 20 et 80 millimètres, de préférence 40 millimètres.

Notons que le joint torique (8) est de préférence en silicone ou en nitrile (copolymère butadiène-acrylonitrile).

Selon le mode de réalisation illustré à la figure 3, en lieu et place de la pièce cylindrique extérieure (13b) et du joint torique (8) illustrés à la figure 2, est disposé un couple de bagues excentriques, à savoir une bague centrale (17a) et une bague extérieure (17b), en tant que moyen de calage, en périphérie de la pièce cylindrique intérieure (13a).

Selon le mode de réalisation précédent, le couple de bagues excentriques est agencé en regard de la tranche du second panneau de verre (3) du vitrage feuilleté fonctionnel (1).

La rotation d'une bague par rapport à l'autre, entraine le déplacement du périmètre intérieur de la bague centrale (17a) par rapport au périmètre extérieur de la bague extérieure (17b). Ce déplacement permet de rectifier le centrage de la pièce cylindrique extérieure (13b) par rapport aux orifices (4a, 4b) des panneaux de verres (2,3), dans la mesure où chaque panneau de verre (2, 3) est percé séparément. La présence du couple de bague (17a, 17b) assure un amortissement du second panneau de verre (3), en cas de sollicitation mécanique de ce dernier contre le dispositif de fixation (11).

Les bagues excentriques (17a, 17b) sont avantageusement en nylon.

Rappelons qu'un double vitrage consiste en l'association d'un vitrage feuilleté fonctionnel selon l'invention avec un simple vitrage feuilleté de sécurité ou un simple vitrage par l'intermédiaire d'une lame de gaz intercalaire délimitée à sa périphérie extérieure par des barrières de scellement hermétiques.

Notons également que la contre-face (9) du vitrage feuilleté fonctionnel selon l'invention, dans un vitrage multiple, peut-être également un vitrage feuilleté fonctionnel, tel qu'éléctrochrome, photovoltaïque, photochrome ou à cristaux liquides, sans sortir du cadre de l'invention.

Précisons qu'un vitrage feuilleté fonctionnel (1) selon l'invention, peut-être positionné tant en face intérieure qu'en face extérieure d'un double ou triple vitrage, voire en position centrale dans un triple vitrage, les structures du vitrage multiple et du dispositif de fixation étant adaptées en conséquence.

Selon le mode de réalisation illustré à la figure 4, un double vitrage est composé d'un vitrage feuilleté fonctionnel (1) selon l'invention, assemblé à un simple vitrage feuilleté de sécurité, tandis que la périphérie des dispositifs de fixation (11), dans la lame de gaz intercalaire, est délimitée par des espaceurs (10).

Précisons qu'un espaceur (10) comprend un anneau muni sur chacune de ses faces, au contact des vitrages, d'une rainure dans laquelle est localisé un joint, tel qu'un joint butyl, enduit avantageusement d'un mastic en silicone, afin d'assurer l'étanchéité de la lame de gaz en périphérie d'un dispositif de fixation (11).

Selon le mode de réalisation illustré à la figure 5, le double vitrage est identique au mode de réalisation illustré à la figure 4, et présente en outre un joint torique (8) au contact du second panneau de verre (3) du vitrage feuilleté fonctionnel (1) destiné à être dirigé vers l'extérieur. Ce joint torique (8) étant tel que précédemment décrit, positionné dans une rainure annulaire (14) localisé sur la pièce cylindrique extérieure (13b) du dispositif de fixation (11).

La présence de moyen de calage, tel que des joints toriques (8), dans un vitrage multiple est d'autant plus recommandé, pour limiter les contraintes mécaniques dues aux contraintes de dilatation et de poids des compositions verrières.

Selon un autre mode de réalisation, le moyen de calage est un couple de bagues excentriques, tel que décrit précédemment, destiné à venir se positionner en périphérie de la pièce cylindrique extérieure (13b).

Selon le mode de réalisation précédent, la pièce cylindrique extérieure (13b) comprend un dégagement (18) périphérique annulaire débouchant vers son extrémité latérale destinée à être disposée en opposition de la pièce conique (12) ou cylindrique et en regard du second orifice (4b).

La pièce cylindrique extérieure (13b) selon le mode de réalisation précédent, se présente ainsi par un profilé générale cylindrique et une paroi annulaire localisée à l'une de ses extrémités, destinée à être positionnée en butée contre le premier panneau de verre (2).

Le dégagement (18) étant destiné à recevoir le couple de bagues excentriques (17a, 17b), une entretoise avantageusement en aluminium, et un second couple de bagues excentriques destiné à venir se positionner contre le second panneau de verre, en regard de la lame de gaz, de la contre-face (9) du double vitrage, destinée à être positionnée à l'intérieur d'un bâtiment.

L'invention concerne également, un procédé d'assemblage d'un vitrage feuilleté fonctionnel (1) comprenant les étapes suivantes :
- Prise d'un premier panneau de verre (2) dans lequel est préalablement fraisé ou percé un orifice (4a),
- Pose d'un joint d'étanchéité périphérique (5) à la périphérie d'une des faces du premier panneau de verre (2), délimitant un espace intérieur destiné à la pose du film fonctionnel (6),
- Pose d'un joint d'étanchéité annulaire (7) en périphérie de l'orifice (4a),
- Positionnement du film fonctionnel (6), dans lequel est préalablement réalisé une découpe (16), de sorte à ce que le film fonctionnel (6) soit placé dans l'espace intérieur du joint d'étanchéité périphérique (5) et de sorte à ce que la découpe (16) soit positionnée en périphérie du joint d'étanchéité annulaire (7),
- Pose du second panneau de verre (3) en regard de l'assemblage du joint d'étanchéité périphérique (5), du film fonctionnel (6) et du joint annulaire (7), postérieurement à la réalisation d'un orifice (4b) en correspondance de celui réalisé sur le premier panneau de verre (2),
- Laminage à chaud de l'ensemble assemblé précédemment,

Selon le procédé précédemment décrit, les étapes de fraisage ou de perçage d'un orifice (4a) sur le premier panneau de verre (2), de pose d'un joint d'étanchéité annulaire (7) et de réalisation d'une découpe (16) du film fonctionnel (6), ainsi que de perçage d'un orifice (4b) sur le second panneau de verre (3), sont répétées autant de fois que nécessaire au nombre de dispositif de fixation (11) à assembler.

De préférences, les étapes précédemment décrites sont répétées sur chacun des coins du vitrage feuilleté fonctionnel (1), à savoir quatre fois, destinées à la pose de quatre dispositifs de fixation (11).

## Revendications

1. Vitrage feuilleté fonctionnel (1) destiné à recevoir au moins un dispositif de fixation (11), comprenant un premier panneau de verre (2) assemblé à un second panneau de verre (3), lesdits panneaux de verre (2, 3) comprenant chacun au moins un orifice (4a, 4b) traversant, formant une paire d'orifices (4a, 4b) coaxiaux, les panneaux de verre (2, 3) délimitant un espace intercalaire (15) dans lequel sont présent un joint d'étanchéité périphérique (5) et un film fonctionnel (6) présentant au moins une découpe (16) délimitant un espace intérieur, **caractérisé en ce qu'**en périphérie de chacune des paires d'orifices (4a, 4b) est agencé un joint d'étanchéité annulaire (7) dans l'espace intérieur de la découpe (16) du film fonctionnel (6).

2. Vitrage feuilleté fonctionnel (1) selon la revendication 1, **caractérisé en ce que** le film fonctionnel (6) est un film thermochrome, éléctrochrome, ou photovoltaïque de préférence thermochrome.

3. Vitrage feuilleté fonctionnel (1) selon la revendication 1 ou 2, **caractérisé en ce que** le joint d'étanchéité annulaire (7) est un polymère thermoplastique imperméable aux gaz.

4. Vitrage feuilleté fonctionnel (1) selon la revendication précédente, **caractérisé en ce que** le joint d'étanchéité annulaire (7) est un caoutchouc butyle.

5. Vitrage feuilleté fonctionnel (1) selon l'une quelconque des revendications précédentes, **caractérisé en ce que** le dimensionnement de la découpe (16) est supérieur au diamètre du joint d'étanchéité annulaire (7).

6. Vitrage feuilleté fonctionnel (1) extérieur attaché, dans lequel le vitrage feuilleté fonctionnel (1) est celui de l'une quelconque des revendications précédentes, comprenant un dispositif de fixation (11) cylindro-conique ou cylindrique comprenant une pièce conique (12) ou cylindrique, prolongée par pièce cylindrique intérieure (13a), ledit dispositif de fixation (11) étant localisé dans la paire d'orifices (4a, 4b) coaxiaux, **caractérisé en ce que** le dispositif de fixation (11) comprend un moyen de calage en périphérie de la pièce cylindrique intérieure (13a).

7. Vitrage feuilleté fonctionnel (1) extérieur attaché selon la revendication précédente, **caractérisé en ce que** le dispositif de fixation (11) comprend une pièce cylindrique extérieure (13b) emmanchée autour de la pièce cylindrique intérieure (13a).

8. Vitrage feuilleté fonctionnel (1) extérieur attaché selon la revendication précédente, **caractérisé en ce que** le moyen de calage est un joint torique (8).

9. Vitrage feuilleté fonctionnel (1) extérieur attaché selon la revendication 7 et 8, **caractérisé en ce que** la pièce cylindrique extérieure (13b) comprend une rainure périphérique annulaire (14), dans laquelle est localisée le joint torique (8) destiné à venir au contact de la paroi de l'orifice (4b) du second panneau de verre (3).

10. Vitrage feuilleté fonctionnel (1) extérieur attaché selon la revendication 6 ou 7, **caractérisé en ce que** le moyen de calage est un couple de bagues (17a, 17b) excentrées.

11. Vitrage feuilleté fonctionnel (1) extérieur attaché selon la revendication précédente, **caractérisé en ce que** la pièce cylindrique extérieure (13b) comprend un dégagement (18) périphérique annulaire débouchant vers l'une de ses extrémités latérales destinée à être disposée en opposition de la pièce conique (12) ou cylindrique.

12. Dispositif de fixation (11) cylindro-conique ou cylindrique d'un vitrage extérieur attaché selon l'une quelconque des revendications 6 à 11, comprenant un assemblage de pièces de révolution, ledit assemblage comprenant une pièce conique (12) ou cylindrique, prolongée par pièce cylindrique intérieure (13a) enchâssée dans une pièce cylindrique extérieure (13b) qui comprend soit une rainure périphérique annulaire (14) dans laquelle est localisé un joint torique (8) soit un dégagement (18) périphérique supérieure débouchant vers son extrémité latérale destinée à être disposée en opposition de la pièce conique (12) ou cylindrique, le dit dégagement (18) étant destiné à être enchâssé par un couple de bagues excentrées (17a, 17b).

13. Procédé d'assemblage d'un vitrage feuilleté fonctionnel (1) selon l'une quelconques des revendications 1 à 5, **caractérisé en ce qu'**il comprend les étapes suivantes :
- Prise d'un premier panneau de verre (2) dans lequel sont préalablement fraisé ou percé au moins un orifice (4a),
- Pose d'un joint d'étanchéité périphérique (5) à la périphérie d'une des faces du premier panneau de verre (2), délimitant un espace intérieur destiné à la pose du film fonctionnel (6),
- Pose d'un joint d'étanchéité annulaire (7) en périphérie dudit au moins un orifice (4a),
- Positionnement du film fonctionnel (6), dans lequel est préalablement réalisé au moins une découpe (16), de sorte à ce qu'il soit placé dans l'espace intérieur du joint d'étanchéité périphérique (5) et de sorte à ce qu'au moins une découpe (16) soit positionnée en périphérie d'un joint d'étanchéité annulaire (7),
- Pose du second panneau de verre (3) en regard de l'assemblage du joint d'étanchéité périphérique (5), du film fonctionnel (6) et d'au moins un joint annulaire (7), postérieurement à la réalisation d'un orifice (4b) en correspondance de celui réalisé sur le premier panneau de verre (2),
- Laminage à chaud de l'ensemble assemblé précédemment,
